# NEW EUROPEAN PATENT SPECIFICATION

(11) **EP 1 436 984 B2**
(45) Date of publication and mention of the opposition decision: **30.05.2018**
(45) Mention of the grant of the patent: 24.04.2013
(21) Application number: 02789209.0
(22) Date of filing: 17.10.2002
(51) Int. Cl.: H04N 5/44

(54) **SYSTEMS AND METHODS FOR PROVIDING DIGITAL RIGHTS MANAGEMENT COMPATIBILITY**
SYSTEME UND VERFAHREN ZUR BEREITSTELLUNG VON KOMPATIBILITÄT IN DER VERWALTUNG DIGITALER RECHTE (DRM)
COMPATIBILITE ENTRE DES SYSTEMES ET DES PROCEDES DE GESTION NUMERIQUE DE DROITS

(30) Priority: 18.10.2001 US 347916 P
(43) Date of publication of application: 14.07.2004
(73) Proprietor: Rovi Solutions Corporation, Santa Clara, CA 95050 (US)
(72) Inventor: CAPITANT, Patrice, Los Altos, CA 94024 (US)
(74) Representative: Beck Greener
(86) International application number: PCT/US2002/033062
(87) International publication number: WO 2003/034313

(56) References cited:
- EP-A- 0 964 573
- EP-A1- 0 978 839
- WO-A-01/37548
- WO-A-01/47627
- WO-A1-01/25948
- WO-A1-01/52021
- WO-A1-01/61591
- WO-A1-01/95613
- WO-A2-02/51156
- US-B2- 7 058 803

## Description

This invention relates to a digital rights management (DRM) system for synchronizing one or more license compliant (L-compliant) devices with one or more CCI compliant devices in a digital rights management (DRM) system.

The communications industry is shifting from traditional analog to digital technology. High-definition television (HDTV) broadcasts have begun in most major cities, and the rapid adoption of the Internet and the World Wide Web has resulted in a corresponding increase in downloadable audio-visual files, such as MP3-formatted audio files, as well as other content. In parallel, low-cost and high-capacity digital recording devices such as digital versatile disk (DVD) recorders, digital VHS video cassette recorders (D-VHS VCR), CD-ROM recorders (e.g., CD-R and CD-RW), MP3 recording devices, and hard disk-based recording units have appeared.

These digital recording devices are capable of producing high quality recordings and copies thereof, without the generational degradation (i.e., increased degradation between successive copies) known in the analog counterparts. Since these recording devices can be used to perform unauthorized and uncontrolled copying of copyrighted, or otherwise protected, material, content providers such as the motion picture and music industries use copy protection to prevent unauthorized users from viewing the information and making unauthorized reproductions of the works.

In the digital era, the problem of copyright piracy is more significant than ever. As a result, DRM technology has been developed and commonly refers to technical measures that help companies and individuals manage their rights in digital content. In practice, the term is often applied broadly to almost any security measure that protects digital content, including access and copy control mechanisms. DRM refers to a variety of technologies designed to balance consumers' rights in enjoying copyrighted works while concurrently preventing the piracy of those works.

A number of DRM systems have been developed to protect against unauthorized transmission of protected multimedia material between digital devices such as personal computers (PCs), digital video disk (DVD) Players, and digital televisions. The multimedia content can be software, game, video, presentations, pictures, movies, sound clips, among others.

One established DRM solution uses conditional access (CA) technology. Typically, each CA device performs a combination of scrambling and encryption to prevent unauthorized use, for example, reception of information. Scrambling is the process of rendering sound, pictures and/or data, etc. unintelligible. Encryption is the process of protecting the secret keys (control words) which have to be transmitted with the scrambled signal for the descrambler to operate, that is, to descramble the scrambled signal. At the transmitting side, a multiplexer multiplexes picture, sound and data information and generates an MPEG-2 transport stream. The MPEG transport stream is forwarded to a scrambler. After scrambling and modulation, the signal is transmitted to the receiving side where the signal is demodulated, descrambled and demultiplexed. In one CA embodiment, Copy Control Information (CCI) such as usage constraints (allowed rights) is embedded in the content and these constraints are subsequently enforced by CCI compliant devices such as set-top boxes.

However, CA technology is rooted in pay-per-view broadcast applications and as such, does not flexibly accommodate users' needs. For example, CA technology does not allow consumers who lawfully acquire digital media to continue to have both the right and the easy ability to make copies of that material for their own noncommercial use, convenience and enjoyment. CA technology also does not provide users with the ability to transfer the content they have lawfully acquired among digital devices in the home and in the extended home environment.

A more recent DRM system uses licenses that specify the usage constraints in a license or certificate and enforced by License compliant (L-compliant) devices such as personal computers. L-compliant system provides flexibility for users while protecting content provider's interests. However, CA and license-based DRM systems are not compatible with each other. As a result, operators as well as users can be inconvenienced by incompatibility among communication equipment.

According to a first aspect of the invention there is provided a digital rights management (DRM) system in accordance with claim 1.

Embodiments may include features of the dependent claims.

Advantages of the system may include one or more of the following. The system allows two or more equipment to exist or function in the same system or environment without mutual interference. A given content or program can be played by different types of devices without modification of the security or copyright protection protocol. The system also allows the substitution of the newer license-based DRM system, for the legacy CCI DRM system in a relatively transparent manner, without loss of information and without the introduction of errors. Thus, user experience is enhanced through product interoperability.

Other advantages include one or more of the following. The system works with a variety of delivery means, including unprotected, protected (such as Conditional Access System (CAS) and/or Digital Rights Management (DRM)) and pre-recorded media. The system works with traditional protection mechanism such as a Residential Gateway (RG) or Set Top Box (STB) border device using a Conditional Access (CA) system (and possibly across a Common Interface (CI)) into the DRM environment. The system also works with cases where the content enters through an unprotected environment (e.g. over a free-to-air public broadcast) before entering the CPCM environment. Regardless of how the content enters the consumer's authorized domain, the system provides end-to-end protection of the content and its related Usage States through the point of consumption by the end user. For both CAS and DRM technologies, the system supports the four copy control usage states of Copy Control Not Asserted, Copy Once, Copy No More, and Copy Never. In addition, the system can indicate whether content may be Moved for Consumption outside the consumer's authorized domain and the necessary protection mechanism for supporting this function. The authorized domain may also include devices not physically attached to the digital home network (e.g. portable entertainment device or remotely connected device).

Moreover, the system is compatible with legacy analogue devices by supporting the protection of content, to the extent possible, flowing across both analogue and digital interfaces between devices within the consumer's authorized domain. Additionally, the system supports a standardized digital interface at a logical level, establishing mutual trust between devices that allows protected content, Usage State information, and the control of content usage to be securely exchanged between two or more DRM compliant devices, regardless of whether they are CCI compliant or L-compliant.

### BRIEF DESCRIPTION OF THE FIGURES

FIG. 1 is a diagram depicting an exemplary environment with multiple DRM compliant systems, including CCI-compliant device(s) and L-compliant device(s).
FIG. 2 is a block diagram depicting an application programming interface.
FIG. 3 is a flowchart illustrating synchronization between a CCI-compliant device and an L-compliant device.
FIG. 4 shows an exemplary process on the L-compliant device.
FIG. 5 shows an exemplary process on the C-compliant device.
FIG. 6 shows an exemplary process on the L-compliant device hand-off operation.
FIG. 7 shows an exemplary process illustrating an L-compliant device regaining control of content from a CCI-compliant device.

### DESCRIPTION

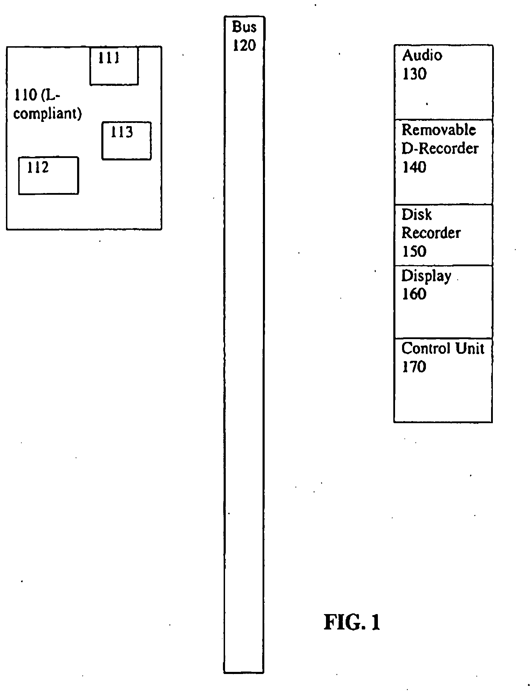

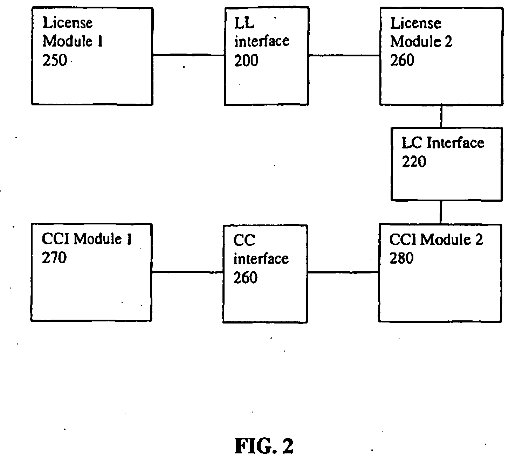

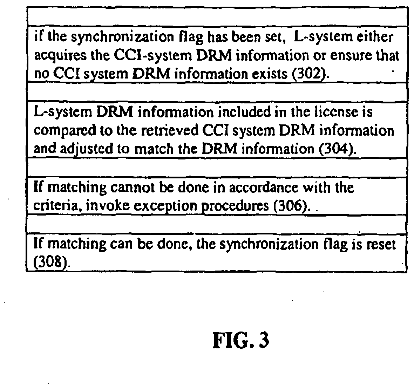

Fig. 1 shows an exemplary environment for an entertainment system 100 with a plurality of compatible DRM products. The system 100 has a plurality of devices 110-170 that can conform to one or more DRM systems including conditional access devices (such as CCI-compliant devices) as well as L-compliant devices. These devices are responsive to the interface shown in Fig. 2 and execute processes shown in Figs. 3-7 to provide compatibility between CCI-compliant devices and L-compliant devices.

The entertainment system 100 includes a digital device 110 for receiving a digital bitstream including program data from one or more service providers. Such service or content providers can include terrestrial broadcasters, cable operators, direct broadcast satellite (DBS) companies, companies providing content for download via the Internet, or any similar such content and/or service provider. The program data may include system information, entitlement control messages, entitlement management messages, content, and other data. System information may include information on program names, time of broadcast, source, and a method of retrieval and decoding, and well as copy management commands that provide digital receivers and other devices with information that will control how and when program data may be replayed, retransmitted and/or recorded. These copy management commands may also be transmitted along with entitlement control messages (ECM), which are generally used by the conditional access unit to regulate access to a particular channel or service. Entitlement management messages (EMM) may be used to deliver privileges to the digital receiver 111 such as rights and descrambling keys. A decryption key is generally a code that is required to access scrambled data, and may be a function of the rights granted. Finally, content in the program data stream may include audio, video or multimedia data, all of which may be in a scrambled or clear format.

The digital device 110 includes a digital receiver 111, which processes the incoming bitstream, extracts the program data therefrom, and provides the program data in a viewable format. The thus extracted program data is then provided to a decoding unit 112 for further processing, including separation of the system information from the content, as well as decoding, or decompressing, of the content to its original form. The digital receiver 111 also regulates access to the program data by other components on the entertainment system 100, and according to one embodiment of the present invention, supports the simultaneous transmission of program data having content in a de-scrambled format (hereinafter referred to as "descrambled content") and program data having content in a scrambled format (hereinafter referred to as "scrambled content").

According to one embodiment, the digital device 110 can be a digital television set where the digital receiver 111 is a set-top box integrated therein, and the decoding unit 112 is an MPEG (Motion Picture Experts Group) decoder. The digital television set's display (not shown) is, according to this embodiment, integrated within the digital device 110. Alternatively, it will be appreciated that the digital device 110 may include only the digital receiver 111 and/or the decoder unit 112, with a display being external to the decoding device 110. An example of this embodiment would be an integrated receiver/decoder (IRD) such as a stand-alone set-top box which outputs NTSC, PAL or other suitable signals.

In one embodiment where the digital device 110 is L-compliant, an initiator 113 ensures that a synchronization flag included in the license is preset before the license is used. The initiator 113 can set or reset the synchronization flag, as detailed in the figures below. In one embodiment, the initiator 113 sets the synchronize flag when content is delivered to the home environment through a conditional access system such as a CCI-compliant system and the initiator 113 resets the synchronization flag when content is delivered through the Internet and rights management is initially controlled by the license. In another embodiment, the initiator 113 uses the flag to prevent the content from being used by specific DRM systems. For example by resetting the flag when the content is delivered through a conditional access system, the initiator 113 signals an L-compliant system that it may not use the content. Although the initiator 113 is shown embedded in the digital device 110, the initiator 113 can exist outside the digital device 110. In another embodiment, the digital device 110 is CCI-compliant and L-compliant.

Digital device 110 may be connected to other components in the entertainment system 100 through a transmission medium 120. The transmission medium 120 operates to transmit control information and data including program data between the digital device 110 and other components in the entertainment system 100. It will be appreciated that other analog and/or digital components may be added or substituted for the components briefly described hereinafter.

The entertainment system 100 may include an audio system 130 coupled to the transmission medium 120. The audio system 130 may include speakers and an audio player/recorder such as a compact disc player or other magneto-optical disc that may be used to play and/or record audio data. A removable digital recorder 140, such as a D-VHS VCR, a DVD recorder, a CD recorder, or an optical media recorder, may also be connected to the digital device 110 and other components of the entertainment system 100 through the transmission medium 120. As known, the digital recorder 140 may be used to record analog or digital audio, video, and other data transmissions, and accordingly an embodiment of the system may be used to record program data received by the digital device 110 and transmitted to the digital recorder 140 over transmission medium 120.

A hard disk recording unit 150 may also be coupled to digital device 110 and other components via transmission medium 120. The hard disk recording unit 150 may be a personal computer system, a stand-alone hard disk recording unit, or other hard disk recording device capable of recording analog or digital audio, video and data transmissions. As with digital VCR 140, according to one embodiment of the system, the hard disk recording unit 150 may be used to record program data received by the digital device 110 and transmitted to the hard disk recording unit 150 over transmission medium 120.

Display 160 may include a high definition television display, a monitor or other device capable of processing digital video signals. In an embodiment where the digital device 110 is a stand-alone set-top box, display 160 may be a digital television set. Also, a control unit 170 may be coupled to the transmission medium 120. The control unit 170 may be used to coordinate and control the operation of some or each of the components on the entertainment system 100, as well and other electronic devices remotely coupled thereto.

Any of the devices 110-170 can conform to one or more DRM systems including CCI compliant devices and L-compliant devices. The oldest DRM system is known as CCI. Examples of CCI systems include a standard adopted by five companies -- Hitachi, Intel, Matsushita (MEI), Sony and Toshiba-known as the "5C" Digital Transmission Content Protection (DTCP) specification. The DTCP specification defines a cryptographic protocol for protecting audio/video (AV) entertainment content from illegal copying, intercepting and tampering as it traverses high performance digital buses, such as the IEEE 1394 bus or the USB2 bus standard. DTCP uses symmetric key cryptographic techniques to encode components of a compliant device. This allows for the authentication of any digital device prior to the transmission of the digital content in order to determine whether the device is compliant. The digital content is itself encoded prior to transmission so that unauthorized copying of the content will result in an unintelligible copy. Other examples of CCI-compliant systems include the POD Copy Protection System from Open Cable and the watermark Copy Protection System from the Video Watermarking Group (VWG).

In one exemplary CCI system, use rights are expressed as bit fields carried by the content stream. The bit fields are physically bound to the content. All operations on the CCI are performed on the stream itself. Thus, CCI operations are done at the transport layer. The CCI bits can also be referred to as Copy Generation Management System (CGMS) bits. The encoded CCI code is made up of 2 bits, of which "00," "10," and "11" indicate "unlimited allowance for copies," "allowance for a single generation copy," and "inhibition of copy," respectively. The "01" bit code is left unused. The manner in which the CCI bits are added to an AV stream is specified for the different kinds of standard (e.g., Motion Picture Expert Group MPEG, Digital Video DV and audio data). These CCI bits are added within the data portion of data stream that constitute the AV information that controls the use of the AV information and content by down stream devices. At each data recording time, a recording device inspects the CCI code added to the AV information of a data packet and refrains from recording them if the CCI code indicates the copy prohibition. If the CCI code indicates the allowance of a single copy, the CCI code is changed to copy prohibition mode and then the AV information is recorded in a recording media once. Thus, the copy generations allowed from the original data can be restricted.

In a new DRM system, license technology is used where usage constraints or allowed rights are specified in a license or a certificate and enforced by license-compliant devices. Such license or certificate may be sent separately from the content or may be sent together with the content.

In the license system, license rights are expressed in a readable language such as Extensible Mark-up Language (XML). The license may be physically bound to the content, or alternatively, may be physically separate and associated with the content through a link. In the embodiment where the license is not physically bound to the content, it can be moved from device to device independently of the content to reflect usage rights of a device to a particular content. License systems operate at the application layer, and examples of systems that support licenses include Microsoft's Window Media and RealNetworks' Real System.

In one embodiment, the license rights are expressed in Extensible Rights Markup Language (XrML). XrML is an XML-based specification grammar for expressing rights and conditions associated with digital content, resources, and services. XrML provides a universal method for specifying rights and issuing conditions (licenses) associated with the use and protection of content. XrML facilitates the creation of an open architecture for rights management of digital content and allows content owners to: (1) Describe rights, fees and conditions appropriate to commerce models they select. (2) Provide standard terms for usage rights with useful, concise and easily understandable meanings. (3) Offer vendors operational definitions of trusted systems for compliance testing and evaluation. (4) Provide extensibility to new language features without compromising. As part of a trusted environment, XrML can be used to apply rights to a wide variety of content and services to enable custom tailoring of digital offerings. For example, a content provider can provide various offerings, each with different rights (e.g., view, save, forward), conditions (e.g. free, fee based, limited time) and delivery methods (e.g., downloaded, streamed, ASP). New services with specific rights can be added to individuals or user groups through use of XrML.

With the new DRM system, the functionality of digital devices such as set-top boxes, digital televisions, digital audio players, and similar such digital devices extends beyond their historical role of conditional access (CA), i.e., merely de-scrambling content to a CA-clear format for real-time viewing and/or listening to further include constraints and conditions on the recording and playback of such digital content. For example, viewers may be allowed to record program data with content in a scrambled format and have the content de-scrambled and displayed at a later time. Program viewing units such as set top boxes may be designed to regulate the de-scrambling of the recorded content in the program data such that a record of the de-scrambling may be made and reported to the service providers. This allows the service providers to monitor the usage of program data by viewers and to bill the viewers. Program viewing units may be configured with key management functions that support special revenue features such as pay per-view, pay-per play, pay-per-time, and other features.

In the embodiment of Fig. 1, although any of the devices 110-170 can conform to a plurality of DRM systems including CCI-compliant devices and L-compliant devices, compatibility and interoperability are achieved by providing a common interface for both types of devices: among these compatible devices, those who need to access (usually descramble) the content share common access protocol and access information (usually descrambling algorithm and descrambling key).

Each of the conditional access devices provides a pass-through capability to pass a license to other L-compliant devices. The license is expressed in a predetermined syntax such as a mark-up language and contains a synchronization flag that is used to provide compatibility and interoperability.

Whenever an L-compliant device receives content from a conditional access device, it obtains DRM data (e.g. CCI bits) from the conditional access device. The L-compliant device checks the synchronization flag in the appropriate license then updates its DRM data to reflect the conditional access device DRM data.

DRM data messages traverse the CCI-compliant devices and the L-compliant devices. The data messages conform to one or more of the following: common rights language syntax, -common syntax for transferring cryptographic data or access data, common domain registration syntax and message, common syntax for authentication status messages, common syntax for revocation messages, a private data message syntax, and common syntax for communicating renewal information.

Each of devices 110-170 uses a baseline DRM framework of tools and a plurality of proprietary DRM plug-ins ("Proprietary DRMs"). The Proprietary DRMs connect via a standardized interface to the Baseline DRM tools. The DRM tools and Baseline DRM Manager are resident in every DRM compliant device. The Proprietary DRMs include either downloadable, tamper resistant software delivered via a secure channel or be robustly implemented in hardware.

Fig. 2 shows an exemplary transport layer and application layer APIs. In this embodiment where CCI technology and license technology coexist, three types of interfaces 200-220 exist: a license module to license module interface 200, a CCI module to CCI module interface 210, and a license module to CCI module 220. The interfaces 200-220 allows L-compliant modules 250-260 to communicate with each other and to communicate with CCI-compliant modules 270-280 The application programming interface allows applications to interact with the Baseline DRM system. The baseline DRM system recognizes an external, proprietary Content Protection and Copy Management system through a bi-directional API with transaction support and an indicator that the baseline DRM system accepts or trusts this external authority.

The interfaces for the modules 200-220 perform the following operations: establish trust between modules, secure transfer of DRM information between modules, secure the transfer of content access information (e.g., keys) between modules, secure the enforcement of rules as applied to the content, recognize the home domain, and support revocation/renewability for the modules.

The devices of Fig. 1 can establish trust through either an L-system or a CCI-system. Moreover, a device with both L-system and CCI-system can detect the result of the operation. To do this, the interface of Fig. 2 allows both systems to be synchronized. The trust exchange mechanism is done through either the CCI-compliant system or the L-compliant system. The L-compliant system provides the CCI-compliant capability to ensure interoperability.

To provide interoperability, synchronization needs to be achieved between DRM information in CCI-compliant systems and L-compliant systems. In one embodiment, the L-compliant system records a hand-off of the DRM function to one of the CCI-compliant system.

The interfaces are implemented in one embodiment by creating in the L-system a plug-in that is compatible with the CCI-system. In one embodiment where the CCI system is the CI interface in a set-top, the L-system plug-in behaves like a resource to the CI interface.

In one implementation, the API enables bi-directional transfer of a DRM data message, an access data message, a domain registration message, an authentication status message, a revocation data message, and a private data message.

For the DRM data message, communication of DRM information between L-system and CCI-system is done through a translation by the L-system between the CCI-language and the license language. The message includes an identification of the content. For the access data message, access information is communicated between the L-system and the CCI-system. The message includes the content identification. For the domain registration message, the interface communicates a domain identity and an indicator showing either a registration or a cancellation request. The authentication status message communicates either a trust establishment or a trust failure between the L-system and the CCI-system. The L-system provides device identification translation, if necessary. The revocation data message communicates information relating to an identification of devices and modules to be revoked. The L-system provides translation services, if necessary. The optional private data message is used to communicate renewability information between the L-system and the CCI-system. This is accomplished by transferring private data through the interface.

Fig. 3 shows a process 300 to synchronize CCI-compliant devices with L-compliant devices. In this process, each L-compliant device obtains DRM data if the CCI- compliant device and the L-compliant device are not synchronized, and the L-compliant device updates its DRM data to match CCI-compliant device DRM data.

In Fig. 3, the synchronization is established by including in the L-compliant system license a synchronization flag to be set any time copy protection has been handed-off to a CCI-compliant system or on the first delivery to a device. The L-compliant system then checks if the synchronization flag has been set, and if so, the L-system either acquires the CCI-system DRM information or ensure that no CCI system DRM information exists (302). Next, the L-system DRM information included in the license is compared to the retrieved CCI system DRM information and adjusted to match the DRM information in accordance with predetermined criteria (304). If matching cannot be done in accordance with the criteria, exception procedures (including revocation) are followed (306). Alternatively, if matching can be done, the synchronization flag is reset (308).

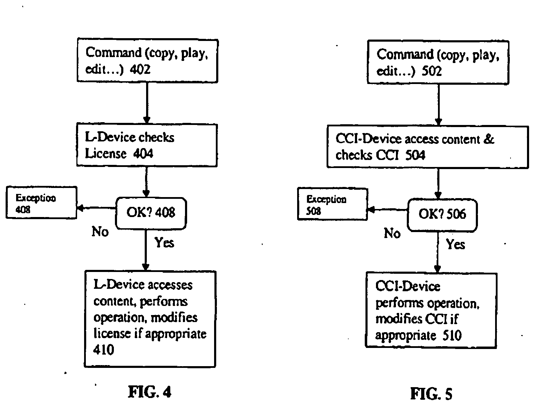

FIG. 4 shows an L-compliant device operational process. First, the process receives a command from a user such as copy, play, or edit content, among others (402). Next, the L-compliant device checks a license that it received for the content to be manipulated (404) and determines whether the license authorizes the command (406). If not, the process throws an exception that can include revoking the license and disabling any future operations on the content (408). Alternatively, if the license is acceptable, the L- compliant device accesses content, performs the requested operation, and modifies the license afterward as appropriate (410).

FIG. 5 shows a CCI-compliant device operational process. First, the process receives a command from a user such as copy, play, or edit content, among others (502). Next, the CCI-compliant device accesses the contents checks a CCI register or bits embedded in the content to be manipulated (504) and determines whether the CCI bits authorize the command (506). If not, the process throws an exception that can include revoking the CCI bits and disabling any future operations on the content (508). Alternatively, if the license is acceptable, the CCI-compliant device accesses content, performs the requested operation, and modifies the bits afterward as appropriate (510).

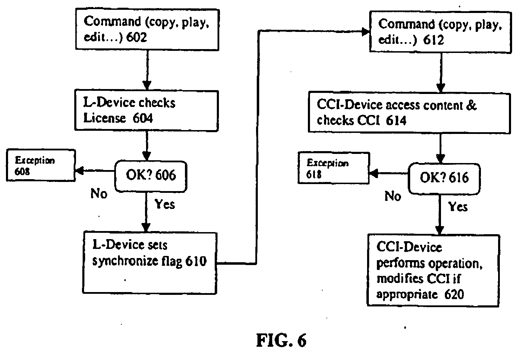

FIG. 6 shows a process illustrating an L-compliant device hand-off operation. First, the process receives a command from a user such as copy, play, or edit content, among others (602). Next, the L-compliant device checks a license that it received for the content to be manipulated (604) and determines whether the license authorizes the command (606). If not, the process throws an exception that can include revoking the license and disabling any future operations on the content (608). Alternatively, if the license is acceptable, the L-compliant device sets a synchronization flag (610). Next, the process passes the user command to the CCI-compliant device (612). Next, the CCI-compliant device accesses the contents, checks DRM data by checking a CCI register or bits embedded in the content to be manipulated (614), and determines whether the CCI bits authorize the command (616). If not, the process throws an exception that can include revoking the CCI bits and disabling any future operations on the content (618). Alternatively, if the DRM access rights data embedded in the CCI bits is acceptable, the CCI-compliant device accesses content, performs the requested operation, and modifies the bits afterward as appropriate (620).

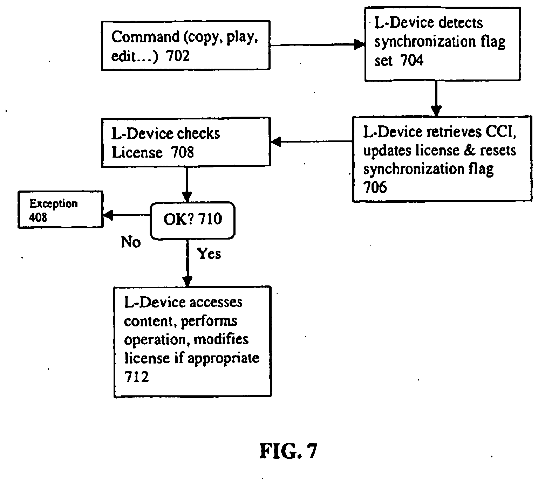

Fig. 7 shows a process illustrating an L-compliant device regaining control of content from a CCI-compliant device. First the process receives a command from the user such as copy, play, or edit content, among others (702), Next, the L-compliant device checks the synchronization flag included the license that it received for the content to be manipulated and detects that the flag has been set (704). Next the L-compliant device retrieves the CCI information through its CCI plug-in, updates the license appropriately, resets the synchronization flag (706) and determines if the updated license authorizes the command (708). If not, the process throws an exception that can include revoking the license and disabling any future operations on the content (710). Alternatively, if the license is acceptable, the L-compliant device accesses content, performs the requested operation, and modifies the license afterward as appropriate (712).

Next, an application of a synchronization procedure is discussed. In the exemplary Case 1 and Case 2, content is transferred from an L-compliant device to a CCI-compliant device and a copy is made at the CCI-compliant device. The original content and the copy (first and second instances of the content) are circulated and eventually received by the L-compliant device.

### Case 1 - Legal Copy - In this case, the following steps occur:

1) The synchronization flag is set in the license and the content is transferred to the CCI-compliant device.
2) When the first instance of the content is received by (reappears on) the L-compliant device, since the synchronization flag is set in the license, the device checks the CCI data and determines that a copy has been made.
3) The L-compliant device updates the license assigning it to the first instance of the content.
4) When the second instance of the content reappears on the L-compliant device, since the synchronization flag is set in the license, the device checks the CCI data and noticing the matching license and CCI DRM data, the L-compliant device resets the synchronization flag in the license.

### Case 2 - Illegal copy - The following steps occur:

1) The synchronization flag is set in the license and the content is transferred to the CCI-compliant device.
2) When the first instance of the content reappears on the L-compliant device, since the synchronization flag is set in the license, the device checks the CCI data and noticing the matching license and CCI DRM data, the L-compliant device resets the synchronization flag in the license.
3) When the second instance of the content reappears on the L-compliant device, since the synchronization flag is reset, the L-compliant device determines that it is dealing with an illegal copy and starts exception procedures.

The next two examples illustrate more complex scenarios. In these examples, content initially resides on a compatible device capable of supporting both CCI and L-compliant devices. The content is first transferred (moved) to a CCI-compliant only device and is then subsequently copied to another CCI-compliant only device. The original and the copy of the content are then transferred onto devices supporting both CCI and L-compliant devices.

### Case 3 - A single license controlling multiple copies

In this case, the following steps occur in the L-system:
1) The synchronization flag is set in the license and the CCI system is allowed to perform the requested operation (such as copy the content).
2) In the first device supporting both CCI and L-devices where either the original or the copy reappears, the CCI DRM data (showing copy-no-more) is passed to the L-compliant device with a content identification (ID).
3) Using the content ID, the license is retrieved, and since the synchronization flag is set, the license is updated to indicate copy-no-more and the synchronization flag is reset.
4) In the second device supporting both CCI and L-compliant devices where either the copy or the original reappears, the CCI DRM data (showing copy-no-more) is passed to the L-compliant device with the content ID.
5) Using the content ID, the license is retrieved and now shows a synchronization flag that has been reset, indicating that the CCI DRM data and the license are synchronized.

### Case 4 - Each copy needs a license

The following steps involving the L-system occur:
1) The synchronization flag is set in the license and control is handed to the CCI-compliant device so that the CCI-compliant device can perform the requested operation.
2) In the first device supporting both CCI and L-compliant device where either the original or the copy reappears, the CCI DRM data (showing copy-no-more) is passed to the L-system with a package ID. The package ID differs from the content ID of Case 3 since two packages can contain the same content.
3) Using the package ID, the license is retrieved, and since the synchronization flag is set, the CCI DRM data is used to update the license, while the copy event is recorded.
4) Since a copy was made, a duplicate license is created in which the package ID is changed and the synchronization flag is reset. The package ID is also changed in the content.
5) In the second device supporting both CCI and L system where either the copy or the original reappears, the CCI (showing copy-no-more) is passed to the L system with the package ID.
6) Using the package ID, the license is retrieved and, since both CCI bits and the license agrees, the synchronization flag is reset.

It is to be understood that various terms employed in the description herein are interchangeable. Accordingly, the above description of the invention is illustrative and not limiting. Further modifications will be apparent to one of ordinary skill in the art in light of this disclosure. Thus, although primarily intended to be used in audio-visual environment, this invention is also applicable in any environment that restrict the use of digital packages and two different classes of systems are present: one using restrictions or usage rights tightly coupled to the digital package itself (conditional access compliant such as CCI-compliant) and another where usage rights are held separately from the digital package in a license (L-compliant). Examples of such environment include but are not limited to software and games delivery systems, digital books and collaborative creation of documents. Even more generally, the system applies to environments where multiple rights management systems that use different methods of associating rights and content cohabitate.

The invention has been described in terms of specific examples which are illustrative only and are not to be construed as limiting. The invention may be implemented in digital electronic circuitry or in computer hardware, firmware, software, or in combinations of them. Apparatus of the invention may be implemented in a computer program product tangibly embodied in a machine-readable storage device for execution by a computer processor. Suitable processors include, by way of example, both general and special purpose microprocessors. Storage devices suitable for tangibly embodying computer program instructions include all forms of non-volatile memory including, but not limited to: semiconductor memory devices such as EPROM, EEPROM, and flash devices; magnetic disks (fixed, floppy, and removable); other magnetic media such as tape; optical media such as CD-ROM disks; and magneto-optic devices. Any of the foregoing may be supplemented by, or incorporated in, specially-designed application-specific integrated circuits (ASICs) or suitably programmed field programmable gate arrays (FPGAs).

While the preferred forms of the invention have been shown in the drawings and described herein, the invention should not be construed as limited to the specific forms shown and described since variations of the preferred forms will be apparent to those skilled in the art. Thus the scope of the invention is defined by the following claims.

## Claims

1. A digital rights management (DRM) system, comprising:
I) one or more license-compliant (L-compliant) devices (110);
II) one or more copy control information (CCI) devices (270) coupled to the one or more L-compliant devices (110);
III) an initiator (113) coupled to the one or more L-compliant devices (110) to initialize one or more of the L-compliant devices (110);
**characterized in that** DRM system comprises:
IV) at least one common interface for the one or more L-compliant devices and CCI devices wherein the interface:
i) establishes trust, securely transfers DRM information and securely transfers content access information, between the said devices; and,
ii) secures the enforcement of rules applied to the content, recognizes a home domain and supports revocation/renewability for the devices,
wherein:
V) an L-compliant device license includes a synchronization flag;
VI) the one or more L-compliant devices (110) are adapted to interoperate with each other and with the one or more CCI compliant devices (270), and
VII) each L-compliant device (110) and each CCI compliant device (270) share content using a common access protocol and access information;
VIII) the initiator is configured to synchronise the one or more CCI and L-compliant devices by setting the synchronisation flag any time copy protection has been handed-off to a CCI-compliant system or on the first delivery to an L-compliant or CCI device;
IX) one or more L-compliant devices are configured to
A) check if the synchronization flag has been set; and,
B) acquire the CCI-system DRM information or ensure that no CCI system DRM information exists, if the synchronization flag has been set; and,
C) compare L-system DRM information included in the license to the retrieved CCI system DRM information and adjust the L-system DRM information to match the CCI system DRM information in accordance with predetermined criteria if the synchronization flag has been set; and,
D) wherein: a) if matching cannot be done in accordance with the predetermined criteria, exception procedures are followed; b) if matching can be done, the synchronization flag is reset.

2. The system of Claim 1, wherein the one or more CCI devices (270) provide a pass-through capability to pass a license to the one or more L-compliant devices (110).

3. The system of Claim 1, wherein one of the L-compliant devices (110) receives a license expressed in a predetermined syntax.

4. The system of Claim 1, wherein one of the L-compliant devices (110) receives a license expressed in a mark-up language.

5. The system of Claim 1, wherein each L-compliant device (110) obtains DRM data if one of the L-compliant (110) devices is not synchronized.

6. The system of Claim 5, wherein the L-compliant device (110) updates its DRM data to reflect a CCI compliant device DRM data.

7. The system of Claim 1, further comprising DRM data messages transmitted to the one or more CCI compliant devices (270) and the one or more L-compliant devices (110).

8. The system of Claim 7, wherein the DRM data messages conform to one or more of the following: a common rights language syntax, a common syntax for transferring cryptographic data or access data, a common syntax for authentication status messages, a common syntax for revocation messages, a private data message syntax, and a syntax for communicating renewal information.

9. The system of Claim 7, wherein content is shared through a common encryption method.

10. The system of Claim 1, wherein one or more of the L-compliant devices (110) obtain DRM data if one or more of the CCI compliant devices (270) and one or more of the L-compliant devices (110) are not synchronized.

11. The system of Claim 10, wherein the L-compliant device (110) updates its DRM data to reflect CCI compliant device (270) DRM data.

## Patentansprüche

1. Digitales Rechteverwaltungs(digital rights management, DRM)-System, umfassend:
I) ein oder mehrere lizenzkonforme (1-konforme) Geräte (110);
II) ein oder mehrere Kopiersteuerungsinformations(copy control information, CCI)-Geräte (270), die an das eine oder die mehreren 1-konformen Geräte (110) gekoppelt sind;
III) einen Initiator (113), der an das oder die mehreren 1-konformen Geräte (110) gekoppelt ist, um eines oder mehrere der 1-konformen Geräte (110) zu initialisieren;
**dadurch gekennzeichnet, dass** das DRM-System umfasst:
IV) mindestens eine gemeinsame Schnittstelle für das eine oder die mehreren 1-konformen Geräte und CCI-Geräte, wobei die Schnittstelle:
i) zwischen den Geräten Vertrauen herstellt, DRM-Informationen sicher überträgt und Inhaltszugangsinformationen sicher überträgt; und
ii) die Durchsetzung der auf die Inhalte angewendeten Regeln sicherstellt, eine Heim-Domäne erkennt und die Zurückweisung/die Erneuerung für die Geräte unterstützt,
wobei:
V) die Lizenz eines 1-konformen Geräts eine Synchronisationsmarke beinhaltet;
VI) das eine oder die mehreren 1-konformen Geräte (110) angepasst sind, um miteinander und mit dem einem oder den mehreren CCI-konformen Geräten (270) zu interagieren, und
VII) jedes 1-konforme Gerät (110) und jedes CCI-konforme Gerät (270) durch Verwenden eines gemeinsamen Zugangsprotokolls und gemeinsamen Zugangsinformationen Inhalte teilen;
VIII) der Initiator konfiguriert ist, um das eine oder die mehreren CCI- und 1-konformen Geräte durch das Setzen der Synchronisationsmarke immer dann zu synchronisieren, wenn der Kopierschutz an ein CCI-konformes System, oder bei der ersten Lieferung an ein 1-konformes Gerät oder ein CCI-Gerät übergeben wurde;
IX) eines oder mehrere 1-konforme Geräte konfiguriert sind, um
A) zu prüfen, ob die Synchronisationsmarke gesetzt wurde; und
B) die DRM-Informationen des CCI-Systems zu beschaffen oder sicherzustellen, dass keine DRM-Informationen des CCI-Systems existieren, wenn die Synchronisationsmarke gesetzt wurde; und
C) DRM-Informationen des L-Systems, die in der Lizenz beinhaltet sind, mit den erlangten DRM-Informationen des CCI-Systems zu vergleichen, und die DRM-Informationen des L-Systems in Übereinstimmung mit vorbestimmten Kriterien einzustellen, um die DRM-Informationen des CCI-Systems abzugleichen, wenn die Synchronisationsmarke gesetzt wurde; und
D) wobei: a) wenn das Abgleichen nicht in Übereinstimmung mit den vorbestimmten Kriterien durchgeführt werden kann, sich Ausnahmeprozeduren anschließen; b) wenn das Abgleichen durchgeführt werden kann, die Synchronisationsmarke zurückgesetzt wird.

2. System nach Anspruch 1, wobei eines oder mehrere CCI-Geräte (270) eine Pass-Through-Fähigkeit bereitstellen, um eine Lizenz an das eine oder die mehreren 1-konformen Geräte (110) weiterzuleiten.

3. System nach Anspruch 1, wobei eines der 1-konformen Geräte (110) eine Lizenz empfängt, die in einer vorbestimmten Syntax ausgedrückt ist.

4. System nach Anspruch 1, wobei eines der 1-konformen Geräte (110) eine Lizenz empfängt, die in einer Auszeichnungssprache ausgedrückt ist.

5. System nach Anspruch 1, wobei jedes 1-konforme Gerät (110) DRM-Daten erhält, wenn eines der 1-konformen Geräte (110) nicht synchronisiert ist.

6. System nach Anspruch 5, wobei das 1-konforme Gerät (110) seine DRM-Daten aktualisiert, um die DRM-Daten eines CCI-konformen Geräts widerzuspiegeln.

7. System nach Anspruch 1, ferner umfassend DRM-Datennachrichten, die an das eine oder die mehreren CCI-konformen Geräte (270) und an das eine oder die mehreren 1-konformen Geräte (110) übertragen werden.

8. System nach Anspruch 7, wobei die DRM-Datennachrichten einer oder mehrerer der Folgenden entsprechen: einer Sprachsyntax mit gemeinsamen Rechten, einer gemeinsame Syntax zum Übertragen kryptografischer Daten oder Zugriffsdaten, einer gemeinsamen Syntax für Authentifizierungsstatusnachrichten, einer gemeinsamen Syntax für Zurückweisungsnachrichten, einer Nachrichten-Syntax für private Daten, und einer Syntax zum Kommunizieren von Erneuerungsinformationen.

9. System nach Anspruch 7, wobei die Inhalte durch ein gemeinsames Verschlüsselungsverfahren geteilt werden.

10. System nach Anspruch 1, wobei eines oder mehrere der 1-konformen Geräte (110) DRM-Daten erhalten, wenn eines oder mehrere der CCI-konformen Geräte (270) und eines oder mehrere der 1-konformen Geräte (110) nicht synchronisiert sind.

11. System nach Anspruch 10, wobei das 1-konforme Gerät (110) seine DRM-Daten aktualisiert, um DRM-Daten des CCI-konformen Geräts (270) widerzuspiegeln.

## Revendications

1. Système de gestion de droits numériques (DRM), comprenant :
I) un ou plusieurs dispositifs conformes aux licences (L-compliant) (110) ;
II) un ou plusieurs dispositifs d'informations de commande de copie (CCI) (270) couplés au ou aux dispositif(s) L-compliant (110) ;
III) un initiateur (113) couplé au ou aux dispositif(s) L-compliant (110) pour initialiser un ou plusieurs dispositif(s) L-compliant (110) ;
**caractérisé en ce que** le système DRM comprend :
IV) au moins une interface commune au ou aux dispositif(s) L-compliant et aux dispositifs CCI, l'interface
i) établissant une confiance, assurant le transfert sécurisé d'informations DRM, et assurant le transfert sécurisé d'informations d'accès, entre lesdits dispositifs ; et
ii) sécurisant l'application de règles appliquées au contenu, reconnaissant un domaine maison, et supportant la révocation/le caractère renouvelable pour les dispositifs,
dans lequel :
V) une licence pour dispositif L-compliant comprend un indicateur de synchronisation ;
VI) le ou plusieurs dispositifs L-compliant (110) sont adaptés pour interagir entre eux et avec le ou plusieurs dispositifs à conformité CCI (270), et
VII) chaque dispositif L-compliant (110) et chaque dispositif à conformité CCI (270) partage un contenu en utilisant un protocole d'accès commun et des informations d'accès ;
VIII) l'initiateur est configuré pour synchroniser le ou plusieurs dispositifs à conformité CCI et L-compliant en établissant l'indicateur de synchronisation chaque fois que la protection anti-copie a été transférée à un système à conformité CCI ou lors de la délivrance initiale à un dispositif L-compliant ou CCI ;
IX) un ou plusieurs dispositifs L-compliant sont configuré(s) pour
A) vérifier si l'indicateur de synchronisation a été établi ; et
B) acquérir les informations DRM du système CCI ou assurer qu'il n'existe aucune information DRM du système CCI, si l'indicateur de synchronisation a été établi ; et
C) comparer les informations DRM du système L-compliant comprises dans la licence avec les informations DRM du système CCI récupérées, et ajuster les informations DRM du système L de façon qu'elles correspondent aux informations DRM du système CCI conformément à des critères prédéterminés si l'indicateur de synchronisation a été établi ; et
D) de sorte que: a) si une correspondance ne peut être effectuée conformément aux critères prédéterminés, des procédures d'exception soient suivies ; b) si une correspondance peut être effectuée, l'indicateur de synchronisation soit réinitialisé.

2. Système selon la revendication 1, le ou plusieurs dispositifs CCI (270) comprenant une fonctionnalité de transfert pour transférer une licence à un ou plusieurs dispositifs L-compliant (110).

3. Système selon la revendication 1, un des dispositifs L-compliant (110) recevant une licence exprimée dans une syntaxe prédéterminée.

4. Système selon la revendication 1, un des dispositifs L-compliant (110) recevant une licence exprimée dans un langage de balisage.

5. Système selon la revendication 1, chaque dispositif L-compliant (110) obtenant des données DRM si un des dispositifs L-compliant (110) n'est pas synchronisé.

6. Système selon la revendication 5, le dispositif L-compliant (110) mettant à jour ses données DRM pour refléter des données DRM d'un dispositif à conformité CCI.

7. Système selon la revendication 1, comprenant en outre des messages de données DRM transmis à un ou plusieurs dispositifs à conformité CCI (270) et au ou aux dispositifs L-compliant (110).

8. Système selon la revendication 7, les messages de données DRM étant conformes à un ou plusieurs des suivants : une syntaxe de langage de droits communs, une syntaxe commune pour transférer des données cryptographiques ou accéder à des données, une syntaxe commune pour authentifier des messages d'état, une syntaxe commune pour des messages de révocation, une syntaxe pour des messages de données privées, et une syntaxe pour la communication d'informations de renouvellement.

9. Système selon la revendication 7, le contenu étant partagé par le biais d'un procédé de cryptage commun.

10. Système selon la revendication 1, un ou plusieurs des dispositifs L-compliant (110) obtenant des données DRM si un ou plusieurs des dispositifs à conformité CCI (270) et un ou plusieurs des dispositifs L-compliant (110) ne sont pas synchronisés.

11. Système selon la revendication 10, le dispositif L-compliant (110) mettant à jour ses données DRM pour refléter des données DRM du dispositif à conformité CCI (270).
